(19) Europäisches Patentamt
European Patent Office
Office européen des brevets

(11) Numéro de publication : **0 174 225 B2**

# (12) NOUVEAU FASCICULE DE BREVET EUROPEEN

(45) Date de publication du nouveau fascicule du brevet : **20.07.94 Bulletin 94/29**

(51) Int. Cl.$^5$ : **C08L 63/00**

(21) Numéro de dépôt : **85401542.7**

(22) Date de dépôt : **26.07.85**

## (54) Compositions réactives à base de oligomères de polyamides et de résines époxydes.

(30) Priorité : **27.08.84 FR 8413244**

(43) Date de publication de la demande : **12.03.86 Bulletin 86/11**

(45) Mention de la délivrance du brevet : **22.02.89 Bulletin 89/08**

(45) Mention de la décision concernant l'opposition : **20.07.94 Bulletin 94/29**

(84) Etats contractants désignés : **BE CH DE FR GB IT LI LU NL SE**

(56) Documents cités :
**EP-A- 84 277**
**EP-A- 100 582**
**EP-A- 230 815**
**DE-A- 2 523 991**
**DE-A- 2 759 313**
**DE-B- 3 242 827**
**JP-A- 7 338 224**
**JP-A-75 007 633**
**US-A- 3 678 127**

(56) Documents cités :
**CHEMICAL ABSTRACTS, vol. 89, août 1978, pages 22-23, réf. no. 44547a, Columbus, Ohio, US; A. MUNOZ-ESCALONA et al.: "Synthesis of the diamino oligomers of nylon 6.6 and 6.T and their curing reaction with epoxy resins"**
**CHEMICAL ABSTRACTS, vol. 82, 1975, page 78, réf. no. 113238v, Columbus, Ohio, US; & JP-A-74 92 176 (03.09.1974)**
**Rev. Plast. Med. 1977, 34(257) pages 695-702 (original)**
**European Polymer Journal, Vol. 13, 1977, pages 337-342**
**Kirk-Othmer, Encyclopedia of Chemical Techn., Vol.8, 2. Ed., 1965,page 302**

(73) Titulaire : **ELF ATOCHEM S.A.**
**4 & 8, Cours Michelet**
**La Défense 10**
**F-92800 Puteaux (FR)**

(72) Inventeur : **Cuzin, Daniel**
**Carentonne**
**F-27300 Bernay (FR)**

(74) Mandataire : **Eggert, Hans-Gunther, Dr.**
**Räderscheidtstrasse 1**
**D-50935 Köln (DE)**

EP 0 174 225 B2

## Description

On savait déjà que les résines époxydes peuvent réagir sur les polyamides ou inversement.

C'est ainsi que des polyamides peuvent être réticulés par de faibles quantités de polyépoxydes. inversement, on peut obtenir des polymères thermodurcissables par traitement de résines époxydes par de faibles quantités de certains polyamides, mais il s'agit dans ce cas de techniques classiques de réticulation des résines époxydes.

La réticulation de résines époxydes par des polyamides est décrite dans la littérature, notamment dans l'ouvrage de LEE et NEVILLE: Handbook of epoxy resins, MAC GRAW HILL, New-York 1967. Les composés "polyamides" utilisés couramment comme durcisseurs dans des formulations de résines époxydes, sont en général amorphes et de faible masse moléculaire. Ce sont. par exemple, des amidopolyamides, obtenus par réaction d'acides gras dimérisés avec un excès de diamine ou de polyamine. Les acides gras dimérisés étant des mélanges d'isomères de plusieurs diacides, de structure mal définie, obtenus par dimérisation de monoacides gras, mono- ou polyinsaturés, les polyamides qui en découlent ont eux-mêmes une structure mal définie, et sont amorphes. En raison de leur teneur élevée en fonction amine (plus de deux fonctions amines par molécule), ils permettent la réticulation des résines époxydes, mais les fonctions amides qu'ils contiennent, ne jouent pas un rôle prépondérant dans les propriétés finales du matériau. Enfin, en raison de leur caractère amorphe et de leur point de ramollissement faible, ces polyamides réagissent à basse température avec les résines époxydes.

Des polyamides semi-cristallins, de masse moléculaire élevée, ont été utilisés comme additifs dans des formulations de résines époxydes pour en améliorer certaines propriétés, mais dans ce cas, ces polyamides agissent plutôt comme des charges. Par ailleurs, la demande de brevet européen n°831 003 311-6 (n° de publication 0085324) décrit des compositions de polyamides préparées par polymérisation anionique d'au moins 75 % de lactames, avec environ 25 % d'un composé époxyde, mais le procédé revendiqué ne peut s'appliquer qu'à certains polyamides, ceux dérivés de lactames, et de plus, mettant en jeu une polymérisation anionique, il en présente tous les inconvénients.

La présente invention a pour objet toute une famille de polymères nouveaux, thermoplastiques, que l'on obtient à partir d'oligomères de polyamides issus de monomères qui ne sont pas nécessairement des lactames, et de divers composés porteurs de fonctions époxydes.

Ces oligomères de polyamides ont une structure définie; leur masse moléculaire, la nature et le nombre des fonctions portées par les extrémités de chaîne sont contrôlés.

Le procédé de fabrication de ces polymères de polyamides et de résines époxydes, procédé qui fait également l'objet de la présente invention, consiste en effet à faire réagir entre eux deux constituants principaux :

d'une part, un oligomère de polyamide semi-cristallin, c'est-à-dire d'un polyamide tel que défini dans le chapitre "Polyamide" de « Encyclopedy of Polymer Science and Technology", vol. 10, page 483 et suivantes, John Wiley and sons, Inc. 1969, par opposition aux polyamides dérivés d'acide gras dimérisés tels que définis dans le même ouvrage dans le chapitre « Polyamide from Fatty Acids", Vol. 10, page 597 et suivantes, le dit oligomère de polyamide portant une seule fonction réactive de type amine primaire à l'une des deux extrémités de la chaîne, l'autre extrémité ne portant pas de fonction réactive.

d'autre part, un composé organique solide ou liquide comportant dans sa molécule au moins deux fonctions de type époxyde.

La réaction entre ces deux constituants peut se faire dans un solvant commun aux deux composés, mais elle a lieu de préférence à l'état fondu, à une température supérieure ou égale au point de fusion de celui des deux constituants qui fond le plus haut.

On obtient de cette manière des polymères dont les propriétés physiques découleront de la structure semicristalline qui leur est conférés par les séquences oligomères polyamides.

On peut également, dans une variante de l'invention, utiliser à la place d'un oligomère polyamide monofonctionnel, un mélange d'oligomères polyamides monofonctionnels différents (fabriqués à partir de divers monomères précurseurs de polyamides);

### Préparation de l'oligomère polyamide

L'oligomère de polyamide mono fonctionnel, peut être obtenu à partir d'un ou plusieurs aminoacides, lactames, sels de diacides avec des diamines ou mélange de diacides avec des diamines. Ceci implique que l'oligomère peut être un oligomère de copolyamide.

La chaîne hydrocarbonée de ces aminoacides, lactames, diacides et diamines a, de préférence, un nombre d'atomes de carbone compris entre 4 et 14.

Ainsi peut-on employer les composés couramment utilisés dans la fabrication des polyamides, par exemple: caprolactame, dodécalactame, acide amino-caproïque, oenantholactame, acide amino-7-heptanoique, amino-11-Undécanoïque, N-Heptylamino-11-undécanoïque amino-12-dodécanoïque; mélanges ou sels de diamines telles qu'hexaméthylène diamine, nonaméthylène diamine, undécaméthylène diamine, dodécaméthylène diamine, métaxylylène diamine et bis-p.aminocyclohexylméthane, avec des diacides comme téréphtalique, isophtalique, adipique, azélaïque, sébacique, dodécane dicarboxylique et glutarique.

Ces composés générateurs de polyamides seront alors fondus en présence d'un composé limitateur de chaîne dont la proportion par rapport aux composés précédents réglera la longueur de la séquence polyamide, autrement dit la masse moléculaire de l'oligomère polyamide.

Une première méthode pour préparer des oligoamides monofonctionnels à une extrémité amine consiste à opérer la polycondensation du ou des monomères de polyamide en présence d'une quantité déterminée de monoamine. On choisira de préférence une monoamine dont les caractéristiques physiques, notamment la volatilité, soient compatibles avec le mode opératoire choisi pour la synthèse de l'oligoamide. A titre d'exemple on peut citer parmi les monoamines utilisables comme limitateurs de chaîne la n-heptylamine, la n-octylamine, la n-dodécylamine, la tétradécylamine, l'hexadécylamine, l'octadécylamine, la cyclohexylamine.

Une seconde méthode pour préparer des oligoamides monoamine consiste à préparer d'abord un oligoamide monoacide, d'une manière analogue à celle décrite précédemment pour les oligoamides monoamine, mais en remplaçant la monoamine par un monoacide organique de formule générale RCOOH où R représente un radical alcoyle de 1 à 24 carbones, linéaire ou ramifié. On fait ensuite réagir cet oligoamide monoacide avec une diamine dont la concentration doit être telle qu'on ait dans le milieu deux fonctions amine pour une fonction acide.

Les diamines utilisables sont par exemple, les diamines aliphatiques, ayant 4 à 22 atomes de carbone comme, par exemple, la tétraméthylène diamine, l'hexaméthylène diamine, les nona et dodécaméthylène diamines.

Des diamines cycloaliphatiques ou aromatiques peuvent également convenir. Comme pour les monoamines, le choix des diamines peut être imposé par des critères de volatilité, la tension de vapeur élevée des diamines de faible masse molaire pouvant être un inconvénient au niveau de la synthèse des oligoamides diamines.

Afin d'illustrer les différentes voies de synsthèse d'oligoamides fonctionnels qui viennent d'être décrites, on donne ci-dessous plusieurs exemples décrivant la préparation d'oligomères polyamides portant en bout de chaîne une fonction réactive amine.

Exemple 1

Préparation d'un oligomère polyamide-11 monoamine primaire

Dans un autoclave en acier de 45 l de capacité muni d'une agitation à ancre, d'un chauffage à bain d'huile, d'une vanne de détente, d'une vanne de fond chauffée électriquement et de tubulures permettant d'effectuer un balayage d'azote, on introduit 10,2kg d'acide amino-11-undécanoique et 1,15 kg de dodécylamine. Pour purger l'autoclave, on le met sous une pression de 5 bars d'azote, puis on détend jusqu'à la pression atmosphérique. L'opération est répétée 5 fois de suite. On chauffe la masse réactionnelle jusqu'à 240 °C et on la maintient pendant 6 heures à cette température. Toutes les vannes étant fermées, la pression dans l'autoclave s'établit à 18 bars. La durée totale des opérations depuis le début du chauffage est alors de 8 h 15 minutes. Au bout de ce temps, on diminue progressivement la pression dans l'autoclave en opérant une détente contrôlée depuis 18 bars jusqu'à la pression atmosphérique en 4 heures, ce qui permet d'éliminer en grande partie l'eau formée par la réaction de polycondensation, puis on maintient la masse réactionnelle sous un balayage d'azote de 0,5 $m^3$/h pendant 3 heures, la température étant toujours de 240 °C. On arrête alors l'agitation et l'on vide le réacteur par sa vanne de fond. Le produit est recueilli dans une cuve en acier remplie d'eau distillée froide, puis il est essoré et séché 12 heures à 80 °C dans une étuve sous vide. La masse molaire de l'oligomère polyamide-11 monoamine obtenu, déterminée par dosage des fonctions amines, est de 1 720.

Exemple 2

Préparation d'un oligomère de polyamide-12 monoamine primaire

Dans un autoclave semblable à celui utilisé dans l'exemple 1, on introduit 14,5 kg de dodécalactame et 1,5 l d'eau. Un réservoir annexe de 3 l de capacité, pouvant résister à une pression de 45 bars, est relié au couvercle de l'autoclave par une vanne. Dans ce réservoir, on introduit 0,57 kg de dodécylamine. L'autoclave et le réservoir annexe sont purgés à l'azote comme indiqué dans l'exemple 1.

Les vannes de l'autoclave étant fermées, on chauffe la masse réactionnelle jusqu'à 270 °C en 2 h 30 minutes et l'on maintient cette température pendant 6 heures, la pression s'établissant à 29 bars. Au bout de ce temps, on iminue progressivement, en 1 heure, la pression jusqu'à 20 bars. Le réservoir annexe qui a été au préalable chauffé à 100 °C, est porté à une pression de 35 bars, et la vanne qui le relie à l'autoclave est ouverte de manière à transférer la dodécylamine dans l'autoclave. Une fois la dodécylamine introduite, on maintient le mélange réactionnel pendant 3 heures à 260-270 °C sous 20 bars puis on effectue une détente progressive jusqu'à la pression atmosphérique, suivie d'un balayage d'azote de 1 heure avec un débit de 0,5 $m^3/h$. La fin des opérations a lieu de la même manière que dans l'exemple 1. La masse molaire, déterminée par dosage des fonctions amines, de l'oligomère polyamide-12 monoamine obtenu est de 5035.

Exemple 3

Préparation d'un oligomère polyamide-6 monoamine

On opère dans le même équipement que celui décrit dans l'exemple 2. On introduit 17 kg de caprolactame et 1,3 l d'eau dans l'autoclave, et 1,25 kg de dodécylamine dans le réservoir annexe. L'ensemble de l'appareil est purgé à l'azote comme indiqué dans l'exemple 1.

Toutes les vannes étant fermées, on chauffe jusqu'à 260 degrés C et la pression s'établit à 20 bars. Ces conditions sont maintenues pendant 4 heures en agitant à 30 t min-l.

On opère alors une détente contrôlée jusqu'à 2,5 bars et l'on abaisse la température à 250 degrés C.

Le réservoir annexe qui a été préalablement réchauffé à 100 degrés C est porté à une pression de 3 bars, et la vanne qui le relie à l'autoclave est ouverte de manière à transférer l'hexaméthylène-diamine dans l'autoclave.

On maintient alors le mélange réactionnel pendant 4 h à 250 degrés C sous 5 bars, puis on abaisse progressivement la pression jusqu'à la pression atmosphérique. Cette phase de détente dure 2 h. On termine alors la réaction par un balayage d'azote pendant 0,5 h à 250 degrés C.

La fin des opérations a lieu de la même manière que dans l'exemple 1.

La masse moléculaire de l'oligomère de polyamide-6 monoamine obtenu, déterminée par dosage de la fonction amine est de 2690.

Composé époxyde

Ce composé, qui réagira avec l'oligoamide. comporte dans sa molécule au moins deux fonctions de type époxyde.

Il peut être solide ou liquide.

Il existe actuellement sur le marché et dans la littérature scientifique et technique un très grand nombre d'exemples de composés organiques répondant à cette définition et dont les structures sont très diverses. Les composés les plus courants sont ceux qui dérivent de la réaction du bisphénol A et de l'épichlorhydrine et, notamment, les composés résultant de l'addition de deux molécules d'épichlorhydrine sur une molécule de bisphénol A, c'est-à-dire les diglycidyléthers de bisphénol A (DGEBA). A titre d'exemple, on peut citer les produits commercialisés par la Société SHELL sous la référence EPIKOTE 828, ou par la Société DOW CHEMICAL sous la référence DER 332. Mais on peut utiliser dans les polymères selon l'invention un grand nombre d'autres résines époxydes telles que celles qui résultent de la fixation d'un groupe époxyde aux deux extrémités d'une chaîne d'hydrocarbure paraffinique (par exemple, des diépoxydes dérivés du butanediol), ou d'une chaîne de polyéther telle que le polypropylène glycol alpha, oméga- diépoxyde, commercialisé par la Société DOW CHEMICAL sous la référence DER 732 ou DER 736. On peut aussi utiliser des composés diépoxydes plus particullers tels que le dioxyde de vinylcyclohexéne, l'époxy-3,4-cyclohexane-monocarboxylate d'époxy-3,4-cyclohexylméthyle, l'époxy-3,4-cyclohoxyl)-3-époxy-8,9-dioxa-2,4-Spiro (5.5) undécane, le bis(époxy-2,3-cyclopentyl)-éther, l'adipate de bis(époxy-3,4-méthyl-6-cyclohexyle), le diglycidyléther de résorcinol.

On peut aussi utiliser des composés polyépoxydes différents.

En plus de ces deux constituants fondamentaux, on peut utiliser également d'autres composés que l'on ajoutera au mélange réactionnel, tels que stabilisants à la chaleur, à la lumière, à l'oxydation, colorants, plastifiants, charges diverses renforçantes ou non renforçantes. agents démoulants.

Proportions respectives de l'oligomère de polyamide et du composé époxyde

La masse moléculaire en nombre des oligomères de polyamide, utilisés dans l'invention, peut varier dans de larges proportions entre 1 000 et 7000.

La proportion de l'oligomère polyamide et du composé époxyde doit être telle que le nombre de fonctions époxydes soit égal au nombre de fonctions réactives terminales de l'oligomère polyamide.

Etant donné que la fonction amine est difonctionnelle vis-à-vis de la fonction époxyde, la composition du mélange réactionnel sera choisie de telle sorte que l'on ait dans le milieu deux fonctions époxydes pour une fonction amine. Si l'on désigne par :

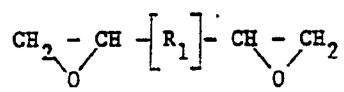

le composé diépoxyde utilisé, où $R_1$ représente un biradical organique contenant éventuellement des hétéroatomes, et par: $R_2$-PA-$NH_2$ l'oligoamide monoamine obtenu en polycondensant un monomère précurseur de polyamide avec une amine $R_2$-$NH_2$ $R_2$ représente un radical hydrocarboné monovalent, on obtient alors, en utilisant une molécule de composé diépoxyde pour une molécule d'oligoamide monoamine, ce qui correspond bien à deux fonctions époxyde pour une fonction amine, un polymère de structure :

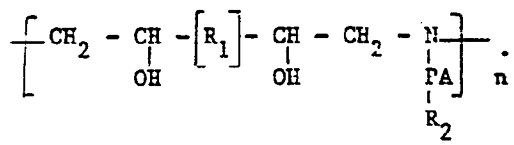

Il s'agit d'un copolymère, non réticulé, composé, d'une part, d'une chaîne principale polyamine tertiaire polyol dérivant de la structure initiale du composé époxyde, d'autre part de chaînons latéraux polyamides.

Pour des raisons de cinétique de réaction, on peut être amené à modifier légèrement le rapport éxistant entre fonction époxyde et fonction amine, rapport qui peut varier entre 1,6 et 2,4.

La réaction qui conduit aux polymères selon l'invention peut être réalisée selon une grande variété de modes opératoires. En effet, l'une des caractéristiques intéressantes du système des deux réactifs-oligoamide fonctionnel et résine époxyde - de l'invention est de réagir rapidement aux températures supérieures à la température de fusion de l'oligoamide choisi, sans dégagement de composés volatils et sans qu'il soit indispensable d'ajouter un catalyseur.

La fabrication de ces copolymères peut se faire dans un autoclave conventionnel du même type que ceux couramment utilisés pour la synthèse d'homopolyamides ou de copolyamides de masse moléculaire élevée: dans ce cas, l'oligoamide choisi est chargé dans le réacteur que l'on chauffe ensuite à une température supérieure d'une dizaine de degrés à la température de fusion de l'oligoamide. On ajoute alors la quantité voulue de résine époxyde et l'on maintient sous agitation pendant le temps nécessaire à l'obtention d'un mélange homogène. Si l'on vidange le mélange homogène par l'intermédiaire d'une filière multitrous, on peut obtenir le polymère sous forme de joncs puis de granulés après passage dans un granulateur.

Ces granulés peuvent être utilisés ensuite pour fabriquer des objets moulés à l'aide des machines classiques utilisées peuvent pour le moulage par injection.

Un autre mode opératoire pour la fabrication du copolymère consiste à réaliser l'homogénéisation et la prépolymérisation du mélange des deux constituants du système dans une machine de compoundage. On obtient de cette façon un prépolymère, sous forme de poudre ou de granulés, utilisable pour une mise en oeuvre ultérieure. Cette mise en oeuvre pendant laquelle la polymérisation se poursuivra peut avoir lieu selon des techniques variées. On peut utiliser comme précédemment, la technique de moulage par injection à condition que la réactivité du système soit compatible avec le temps de séjour dans la machine d'injection. On peut utiliser aussi la technique de "Pultrusion" qui consiste à réaliser un élément profilé de section déterminée, par enrobage par une résine, dans une filière dite "tête d'équerre", d'une âme en fibre de verre qui défile en continu dans la dite filière dont la section est celle du profilé que l'on veut obtenir; si besoin est, le profilé, après enrobage de la résine, passe dans un four où la polymérisation de la résine est menée à son terme.

En utilisant la technique de réaction - injection - moulage (RIM), décrite, par exemple, dans Modem Plastics International, Avril 81, on peut réaliser en une seule opération la fabrication du polymère et son moulage en pièces de grandes dimensions.

Dans ce cas, les deux constituants du système - l'oligoamide et la résine époxyde - sont stockés à l'état liquide dans deux réservoirs séparés, maintenus à une température suffisante pour que les deux réactifs soient fluides: la polymérisation et le moulage de l'objet fini sont réalisés simultanément en pompant, à partir des deux réservoirs, la quantité nécessaire de chacun des deux réactifs, en les mélangeant dans un dispositif spécial assurant très rapidement un mélange très intime des deux constituants et en injectant le mélange obtenu dans le moule. La polymérisation de la résine a lieu au cours du mélange des deux constituants dans la tête de mélange et se poursuit au cours du transfert dans le moule pour s'achever dans ce dernier. Dans ce type de mode opératoire, étant donné que le temps de cycle pour la fabrication de l'objet fini est directement lié à la vitesse de polycondensation du mélange des deux constituants, on choisira les associations oligoamide - composé époxyde qui sont les plus réactives.

On pourra, si nécessaire, encore accroître la vitesse de réaction en ajoutant un catalyseur tel qu'une amine tertiaire.

On peut, bien entendu, réaliser des objets finis de manière analogue en utilisant les techniques conventionnelles de la transformation des thermoplastiques telles que l'extrusion, le moulage par injection, le rotomoulage, le thermoformage...

On donne ci-après plusieurs exemples destinés à illustrer l'invention, sans toutefois en limiter la portée.

Les propriétés physiques ou mécaniques des polymères réalisés ont été déterminées sur éprouvettes moulées ou usinées en utilisant les méthodes normalisées suivantes :

traction-allongement (norme ASTM D 688)
module de flexion (norme ASTM D 790)
température de fléchissement sous charge (HDT) (norme ASTM D 648).
dureté SHORE (norme ISO D 868).

La viscosité inhérente est mesurée à 25 °C sur des solutions de polymère dans le m-crésol de 0,5 pour 100 en poids et exprimée en $dl.g^{-1}$.

Exemple 4

Dans un autoclave en acier de 6 l de capacité, muni d'une agitation à ancre, d'un chauffage électrique, d'une vanne de fond chauffée électriquement, et d'un dispositif de tubulures permettant d'effectuer un balayage d'azote, on introduit 1 230 g de polyamide 11 monoamine de Mn = 1 720 préparé selon le mode opératoire décrit dans l'exemple 1, et 270 de DGEBA (EPIKOTE 828 de la Société SHELL) d'indice d'époxyde 187, ce qui correspond à un rapport époxyde/amine égal à 2. Les proportions pondérales de chaque constituant sont 82 % d'oligomère de polyamide 11 monoamine et 18 % de résine époxyde. On ferme le réacteur, on porte le mélange à 210°C pendant 1 h 30 minutes, sous agitation et balayage d'azote. Au bout de ce temps de réaction, on recueille, par l'intermédiaire de la vanne de fond du réacteur, un polymère homogène, blanchâtre, rigide, de viscosité inhérente dans le méta-crésol $\eta i = 0{,}87\ dl \cdot g^{-1}$ et de viscosité intrinsèque $\eta = 1{,}06\ dl \cdot g^{-1}$.

Propriétés mécaniques reportées dans le tableau 1.

Exemple 5

On opère comme dans l'exemple 4, mais en utilisant 1 395g d'oligomère de polyamide -12 monoamine de Mn = 5 035, obtenu selon le mode opératoire décrit dans l'exemple 2 et 105 g de DGEBA (EPIKOTE 828 de la Société SHELL) d'indice d'époxyde 187. La stoechiométrie époxyde/amine est égale à 2 et les proportions pondérales de chaque constituant sont de 92% d'oligomère de polyamide 12 et 8 % de résine époxyde. Après 30 minutes de réaction à 200 °C, on soutire par la vanne de fond du réacteur un polymère blanchâtre, d'aspect homogène, rigide et opaque, de viscosité inhérente dans le méta-crésol = $1{,}45\ dl \cdot g^{-1}$ et de viscosité intrinsèque $\eta = 1{,}55\ dl \cdot g^{-1}$.

Propriétés mécaniques reportées dans le tableau n°1.

Exemple 6

On réalise par compoundage à l'aide d'une extrudeuse double-vis à 12 fourreaux WERNERPLFEIDERER ZSK 30 un mélange homogène contenant 86% en poids d'oligomère de polyamide-11 monoamine primaire de Mn = 2 191, obtenu selon la méthode décrite dans l'exemple 1 et 14 % en poids de résine époxyde DGEBA (DER 332 de la Société DOW CHEMICAL d'indice d'époxyde 176), le rapport époxyde/amine dans le mélange étant égal à 2.

L'oligomère polyamide est introduit dans la machine par la trémie d'alimentation, sous forme d'une poudre grossière, et la résine époxyde est introduite à l'état liquide dans le polyamide fondu, au niveau du 4e fourreau de la machine à l'aide d'une pompe à injection sous une pression de 15 à 20 bars. Les températures de la matière à différents niveaux des vis sont comprises entre 194 et 220 °C,

Le débit est de 10 kg/h et le temps de séjour dans la machine de 1 mn 30 s. On obtient à la filière un liquide homogène, visqueux, qui se solidifie à la température ambiante et qui peut être facilement broyé sous forme de poudre. La viscosité inhérente de ce prépolymère, dans le m-crésol, est de 0,73.

Le prépolymère est utilisé pour alimenter une presse à injecter et mouler des éprouvettes d'essais mécaniques : barreaux parallélépipédiques de dimensions 6,4 × 12,7 × 127 mm et éprouvettes en formes d'haltères de 2 mm d'épaisseur et de 160 mm de longueur, la température de plastification étant de 180 °C et celle du moule de 20 °C Les propriétés mécaniques déterminées sur les éprouvettes moulées sont données dans le tableau n° 1.

Exemple 7

On opère comme dans l'exemple 11 mais avec un oligomère de polyamide-11 monoamine de Mn = 4265. La proportion pondérale d'ollgomère polyamide est de 92,4 % et celle de DER 332 de 7,6 %. Le produit obtenu en sortie de filière, beaucoup plus visqueux que dans l'exemple précédent, peut être granulé dans les conditions habituellement utilisées pour les polymères thermoplastiques. Sa viscosité inhérente dans le m-crésol est de 1,06.

Les granulés obtenus sont utilisés comme dans l'exemple précédent, pour mouler des éprouvettes d'essais mécaniques dans les conditions suivantes :

température de plastification : 220 °C
température d'injection : 250 °C
température de moule : 20 °C

Les propriétés mécaniques déterminées sur les éprouvettes moulées sont données dans le tableau n°1.

Exemple 8

Dans la cuve de mélange d'un malaxeur HAAKE, maintenue à 230 °C, on introduit 48,6 g de l'oligomère de polyamide 6 monoamine de Mn = 2690 préparé à l'exemple 3.

Le couple en g. m. pour une vitesse de rotation des pales de malaxeur de 60 $t.mn^{-1}$ est nul. On ajoute alors 6,4 g de résine époxyde DGEBA (DER 332 de DOW CHEMICAL) de Mn = 352 préalablement réchauffée à 160 °C ce qui correspond à un rapport époxyde/amine = 2.

Au bout de 15 minutes de malaxage, le couple enregistré par l'appareil est de 555 gm ; la viscosité inhérente du polyamide est 0,9.

Par DST, on détermine les propriétés physiques suivantes :

température de transition vitreuse : 50°C
température de fusion : 212°C
taux de cristallinité : 33 pour cent.

Tableau 1

| | Oligoamide Nature | Oligoamide $\overline{Mn}$ | Résine époxyde Nature | Résine époxyde $\overline{Mn}$ | Rapport Epoxyde acide ou Epoxyde amine | Essai de traction (ASTM D 638) Résistance rupture MPa | Essai de traction (ASTM D 638) Allongement rupture % | HDT (ASTM D 648) °C | Module de flexion MPa (ASTM D 790) à 20 °C | Dureté SHORE D (ISO D 868) |
|---|---|---|---|---|---|---|---|---|---|---|
| Exemple 4 | $PA_{11}$ mono $NH_2$ | 1720 | DGEBA (1) | 374 | 2 | — | — | — | 1 183 | — |
| Exemple 5 | $PA_{12}$ mono $NH_2$ | 5035 | DGEBA (1) | 374 | 2 | 46,3 | 70 | 127 | 1 248 | 68 |
| Exemple 6 | $PA_{11}$ mono $NH_2$ | 2191 | DGEBA (2) | 352 | 2 | 26,4 | 4 | — | 1 212 | 70 |
| Exemple 7 | $PA_{11}$ mono $NH_2$ | 4265 | DGEBA(2) | 352 | 2 | 43,1 | 22 | — | 1 246 | 73 |

(1) Diglycidyléther de bisphénol A - Epikote 828 (Shell) - Indice d'époxyde = 187.
(2) Diglycidyléther de bisphénol A - DER 332 (Dow Chemical) - Indice d'époxyde = 176.
(3) PPG alpha, oméga diépoxyde - DER 732 (Dow Chemical) - Indice d'époxyde = 330.

## Revendications

1. Polymères thermoplastiques obtenus par fusion à partir d'une composition réactive comprenant au moins deux constituants réactifs caractérisés en ce que l'un des constituants est un composé polyépoxyde et l'autre un oligomère monoamine primaire de polyamide semi-cristallin obtenu par polycondensation d'au moins un monomère en présence d'une monoamine primaire présentant une masse moléculaire moyenne

comprise entre 1000 et 7000, les proportions entre le composé polyépoxyde et l'oligomére monoamine étant telles qu'il y ait de 1,6 à 2,4 fonctions époxydes pour une fonction amine.

2. Polymères selon la revendication 1 caractérisés en ce que le composé polyépoxyde est choisi dans le groupe constitué par les diglycidyléthers de bisphénol A et les polypropylèneglycols alpha, omégadiépoxyde.

3. Polymères suivant la revendication 2 caractérisés en ce que les diglycidyléthers de bisphénol A ont une masse moléculaire en nombre comprise entre 300 et 2100 et en indice d'époxyde compris entre 150 et 1100.

4. Polymères selon l'une des revendications 1 à 3 caractérisés en ce que ledit oligomère de polyamide est obtenu par polycondensation d'au moins un monomère, c'est-à-dire d'un ou plusieurs aminoacides, lactames, sels de diacide avec des diamines ou mélanges de diacides avec des diamines ou de mélanges de tous ces monomères, dont la chaîne hydrocarbonée a, de préférence, entre 4 et 14 atomes de carbone en présence d'une monoamine primaire.

5. Polymères selon l'une des revendications 1 à 4 caractérisés en ce que ledit oligomère de polyamide est obtenu par polycondensation de caprolactame ou de dodécalactame ou d'acide 11-aminoundécanoique ou d'adipate d'hexaméthylène diamine ou des mèlanges de ces monomères entre eux.

6. Polymères selon la revendication 1 caractérisés en ce que ladite monoamine est la dodécylamine.

7. Application des polymères selon l'une des revendications 1 à 6 à la fabrication d'objets moulés par injection, compression ou par la technique réaction-injection-moulage, soit d'objets extrudés.

8. Application d'une composition selon l'une de revendications 1 à 6 à la réalisation par la technique de la "pultrusion" d'objets composites constitués de fibres longues assemblées par le polymère issu de ladite composition.

9. Application d'une composition selon l'une des revendications 1 à 6 au revêtement d'objets métalliques.

10. Application d'une composition selon l'une des revendications 1 à 6 comme agent adhésif.

## Patentansprüche

1. Thermoplastische Polymere erhältlich durch Verschmelzung ausgehend von einer reaktiven Zusammensetzung enthaltend wenigstens zwei reaktive Bestandteile, dadurch gekennzeichnet, daß einer der Bestandteile eine Polyepoxid-Verbindung und der weitere Bestandteil ein primäres Monoamin eines semikristallinen Polyamid-Oligomers ist, das durch Polydondensation wenigstens eines Monomeren in Gegenwart eines primären Monoamins erhalten wurde und eine mittlere Molekularmasse zwischen 1000 und 7000 aufweist, wobei die Verhältnisse zwischen der Polyepoxid-Verbindung und dem Monoamin-Oligomeren so gewählt sind, daß 1,6 bis 2,4 Epoxidfunktionen auf eine Aminfunktion kommen.

2. Thermoplastische Polymere nach Anspruch 1, dadurch gekennzeichnet, daß die Polyepoxid-Verbindung ausgewählt wird aus der Gruppe bestehend aus den Diglycidylethern des Bisphenol A und den Polypropylenglydol-alpha, omega-Diepoxiden.

3. Thermoplastische Polymere nach Anspruch 2, dadurch gekennzeichnet, daß die Diglycidylether des Bisphenol A eine Molekularmasse haben, die zahlenmäßig zwischen 300 und 2100 liegt, und einen Epoxid-Index von 150 bis 1100.

4. Thermoplastische Polymere nach einem der Ansprüche 1 bis 3, dadurch gekennzeichnet, daß dieses Polyamid-Oligomere erhalten wird durch Polykondensation wenigstens eines Monomeren, d.h. ein oder mehrerer Aminosäuren, Lactame, Salze von Disäuren mit Diaminen oder Gemische von Disäuren mit Diaminen oder Gemische all dieser Monomeren, deren Kohlenwasserstoffkette vorzugsweise 4 bis 14 Kohlenstoffatome aufweist, in Gegenwart eines primären Monoamins.

5. Thermoplastische Polymere gemäß einem der Ansprüche 1 bis 4, dadurch gekennzeichnet, daß das Polyamid-Oligomere erhalten wird durch Polykondensation von Caprolactam oder Dodecalactam oder 11-Aminoundecansäure oder Hexamethylendiaminadipat oder von Gemischen dieser Monomere.

6. Thermoplastische Polymere nach Anspruch 1, dadurch gekennzeichnet, daß das Monoamin Dodecylamin ist.

7. Verwendung einer Zusammensetzung gemäß einem der Ansprüche 1 bis 6 zur Herstellung von Gegenständen im Spritzguß, durch Preßformen, durch die Reaktionsspritzgußtechnik oder von extrudierten Gegenständen.

8. Verwendung einer Zusammensetzung gemäß einem der Ansprüche 1 bis 6 zur Herstellung von Verbundgegenständen mit Hilfe der Pultrusions-Technik, die aus langen Fasern bestehen, die durch das aus dieser Zusammensetzung hervorgegangene Polymer verbunden sind.

9. Verwendung einer Zusammensetzung gemäß einem der Ansprüche 1 bis 6 zur Beschichtung von Metallgegenständen.

10. Verwendung einer Zusammensetzung gemäß einem der Ansprüche 1 bis 6 als Klebstoff.

## Claims

1. Thermoplastic polymers produced by melting from a reactive composition comprising at least two reactive components, characterized in that one of the components is a polyepoxide compound and the other a primary monoamine of a semi-crystalline polyamide oligomer produced by polycondensation of at least one monomer in the presence of a primary monoamine and having an average molecular mass of between 1000 and 7000, the proportions of the polyepoxide compound to the monoamine oligomer being such that there are 1.6 to 2.4 epoxide groups per amine group.

2. Thermoplastic polymers according to claim 1, characterized in that the polyepoxide compound is chosen from the group consisting of bisphenol A diglycidyl ethers and polypropylene glycol alpha, omega-diepoxide.

3. Thermoplastic polymers according to claim 2, characterized in that the bisphenol A diglycidyl ethers have a number-average molecular mass of between 300 and 2100 and an epoxide number of between 150 and 1100.

4. Thermoplastic polymers according to one of claims 1 to 3, characterized in that the said polyamide oligomer is produced by polycondensation of at least one monomer, that is to say of one or more amino acids, lactams, salts of diacids with diamines or mixtures of diacids with diamines or mixtures of all these monomers, in which the hydrocarbon chain has, preferably, between 4 and 14 carbon atoms.

5. Thermoplastic polymers according to one of claims 1 to 4, characterized in that the said polyamide oligomer is produced by polycondensation of caprolactam or of dodecalactam or of 11-aminounde-canoic acid or of hexamethylenediamine adipate or of mixtures of these monomers with each other in the presence of a primary monoamine.

6. Thermoplastic polymers according to claim 1, characterized in that the said monoamine is dodecylamine.

7. Application of a composition according to one of claims 1 to 6 to the manufacture either of articles moulded by injection, compression or by the reaction injection moulding technique, or of extruded articles.

8. Application of a composition according to one of claims 1 to 6 to the production by the pultrusion method of composite articles consisting of long fibres held together by the polymer derived from the said composition.

9. Application of a compositon according to one of claims 1 to 6 to the coating of metal articles.

10. Application of a composition according to one of claims 1 to 6 as an adhesive agent.